# EUROPÄISCHE PATENTSCHRIFT

(11) **EP 1 980 472 B1**
(45) Veröffentlichungstag und Bekanntmachung des Hinweises auf die Patenterteilung: **26.10.2011**
(21) Anmeldenummer: 08007264.8
(22) Anmeldetag: 12.04.2008
(51) Int. Cl.: B62D 25/08, B62D 25/14

(54) **Servicepanel für ein Kraftfahrzeug**
Service panel for a motor vehicle
Panneau de service d'un véhicule automobile

(30) Priorität: 12.04.2007 DE 102007017168
(43) Veröffentlichungstag der Anmeldung: 15.10.2008
(73) Patentinhaber: GM Global Technology Operations LLC, Detroit, MI 48265-3000 (US)
(72) Erfinder: Bechthold, Ralf-Dieter, 55278 Weinolsheim (DE); Wawers, Uwe, 55129 Mainz (DE)
(74) Vertreter: Strauss, Peter

(56) Entgegenhaltungen:
- EP-A- 1 518 780
- WO-A-2005/032866
- DE-A1-102004 049 034
- JP-A- 2004 262 290
- US-A1- 2003 085 591
- US-A1- 2005 067 858

## Beschreibung

Die Erfindung betrifft ein Servicepanel für ein Kraftfahrzeug, insbesondere einen Pkw, in dem eine Domstrebe integriert ist. Weiterhin betrifft die Erfindung ein Kraftfahrzeug mit einem derartigen Servicepanel.

Bei einem Kraftfahrzeug wird der Motorraum über die Stirnwand vom Fahrgastraum abgetrennt. In einem oberen Bereich, nachfolgend Stirnwand oben genannt, ragt die Stirnwand teilweise nach vorne bzw. in Fahrzeuglängs- bzw. x-Richtung ab. Dieser nach vorne abragende Teil der Stirnwand oben, nachfolgend Stirnwand oben vorne genannt, dient zusammen mit der Stirnwand oben u. a. als Halterung diverser Komponenten wie insbesondere den Scheibenwischermodulen. Da sich diese Module in der Lücke zwischen Motorhaube und Windschutzscheibe befinden, werden sie nach oben durch eine Abdeckung, meist Wasserabweiser genannt, vor Schmutz und Wasser geschützt. Diese Module befinden sich in einem meist aus Kunststoff bestehenden Wasserkasten, der an der Stirnwand oben befestigt ist.

Neben ihrer Funktion als Halterung dient die Stirnwand oben vorne auch als Strukturteil, die das Kraftfahrzeug in Fahrzeugquer- bzw. y-Richtung versteift. Aus diesem Grund ist die Stirnwand oben vorne an die Federbeindome angebunden.

Je nachdem, welcher Platzbedarf für die verschiedenen Komponenten im Motorraum besteht, muss die Stirnwand oben vorne gegebenenfalls freigeschnitten werden. Dieser Freischnitt muss dann wieder durch das sogenannte Servicepanel, mitunter auch Stütze Wasserabweiser genannt, verschlossen werden, damit der Wasserkasten zum Motorraum hin abgekapselt wird und z.B. das Scheibenwischermodul noch montiert werden kann. Ein derartiger Freischnitt kann beispielsweise dann erforderlich sein, wenn die Windschutzscheibe recht weit nach vorne gezogen ist. In diesem Fall fällt die Stirnwand oben vorne als Strukturteil aus. Um dies zu kompensieren, ist es in solchen Fällen bekannt, eine Domstrebe einzuziehen, die in Fahrzeugquerrichtung verläuft und an den Federbeindomen angebunden ist.

Das Dokument JP 2004 262290 A beschreibt ein zwischen Motorhaube und Windschutzscheibe vorgesehenes Verkleidungsteil, welches sich mit einem oberen Ende an ein Dichtungsteil einer Motorhaube erstreckt. Das Verkleidungsteil ist hierbei aus Kunstharz geformt und ein unterer Abschnitt hiervon ist als Stahlplatte ausgebildet, die mit dem Harzteil verschraubt ist.

Bei der Entwicklung von Kraftfahrzeugen wird versucht, Fußgänger für den Fall eines Aufpralls auf die Motorhaube besser zu schützen. Zur Verwirklichung dieses

Fußgängeraufprallschutzes gibt es Bestimmungen, die besagen, dass starre Komponenten im Motorraum einen gewissen Mindestabstand von der Motorhaube haben müssen. Prallt ein Fußgänger auf die Motorhaube, so kann diese über eine gewisse Strecke nachgeben und so den Aufprall dämpfen.

Es ist eine Aufgabe einer Ausführungsform der Erfindung, für den Fall, dass die Stirnwand oben vorne als Strukturteil ausfällt, einen besseren Fußgängeraufprallschutz zu gewährleisten.

Die Lösung dieser Aufgabe erfolgt mit den Merkmalen der unabhängigen Ansprüche. Vorteilhafte Weiterbildungen und weitere Ausführungsformen ergeben sich mit den Merkmalen der abhängigen Ansprüche.

Ein erster Aspekt der Erfindung betrifft ein Servicepanel für ein Kraftfahrzeug, insbesondere einen Pkw. Das Servicepanel ist ausgebildet zum Schließen einer Öffnung zwischen einer Stirnwand, insbesondere der Stirnwand oben vorne, und einer Motorhaube unter Befestigung an den Federbeindomen des Kraftfahrzeugs. Das Servicepanel besitzt hierbei eine integrierte Domstrebe.

Die genannte Lösung stellt ein Hybridbauteil aus einem Servicepanel und einer Domstrebe dar, wobei die Domstrebe in dem Servicepanel integriert ist. Das Hybridbauteil ist einsetzbar für diejenigen Fälle, bei denen die Stirnwand oben vorne als Strukturteil ausfällt und insofern nach dem Strand der Technik eine Domstrebe zur Querversteifung des Kraftfahrzeugs erforderlich wäre. Das genannte Bauteil erfordert in vertikaler Richtung weniger Bauraum als eine separate Domstrebe in Kombination mit einem Servicepanel. Auf diese Weise erlaubt das Hybridbauteil einen längeren Deformationsweg der Motorhaube für den Fall eines Fußgängeraufpralls. Dies bedingt wunschgemäß einen besseren Fußgängeraufprallschutz.

Dadurch, dass die Einheit aus Domstrebe und Servicepanel kleiner ausfällt als zwei einzelne Komponenten, wird das Design des Fahrzeugs erleichtert und ergeben sich mehr designerische Freiheitsgrade. So fällt es mit dem genannten Hybridbauteil leichter, ein Kraftfahrzeug mit einer recht weit nach vorne gezogenen Windschutzscheibe zu realisieren.

Durch das vorgeschlagene Hybridbauteil muss bei der Herstellung des Kraftfahrzeugs nur ein Teil anstelle von zwei Teilen montiert werden. Dadurch wird die Fertigung beschleunigt und werden die Produktionskosten gemindert.

Weiterhin ergibt sich durch das Hybridbauteil im Servicefall eine schnellere Zugänglichkeit von denjenigen Komponenten, die von der Stirnwand oben gehalten werden, z. B. den Scheibenwischermodulen. Es muss zum Beispiel lediglich das Hybridbauteil ausgebaut werden, um einen defekten Scheibenwischermotor zu ersetzen, wohingegen beim Stand der Technik zwei Komponenten in Gestalt des Servicepanels und der Domstrebe auszubauen wären. Die verbesserte Wartungsfreundlichkeit beschleunigt insofern den Service und führt beim Kunden zu geringeren Kosten.

In einer zweiten Ausführungsform besteht das Servicepanel aus Kunststoff mit einer kunststoffumspritzten Domstrebe aus Metall.

Durch die Wahl von Kunststoff kann das Gewicht des Servicepanels gering gehalten werden, wobei Metall als Material für die Domstrebe die erforderliche Querversteifung ermöglicht. Die fertigungstechnische Realisierung des Hybridbauteils durch Spritzgießen erleichtert das Design einer optimal querversteifenden Servicepanels bei gleichzeitigem Verschließen der Öffnung zwischen Motorhaube und Stirnwand. Gleichzeitig ist man bei der Formwahl weitestgehend frei und kann die Komponenten im Motorbereich beliebig anordnen.

In einer dritten Ausführungsform verfügt die Domstrebe endseitig über Halterungen zu ihrer Befestigung an Federbeindomen. Über die Halterung kann die Domstrebe mit beiden Federbeindomen verschraubt werden, um die Anbindung an die weitere Karosserie zu gewährleisten.

Eine verbesserte Anbindung des Servicepanels an die restliche Karosserie ergibt sich bei einer weiteren Ausführungsform dadurch, dass deren Domstrebe mit Befestigungsstellen zum Verbinden mit einer Stirnwand eines Kraftfahrzeugs ausgestattet ist. Die Befestigungsstellen können als ausgestellte Flansche realisiert sein, über die die Domstrebe mit der Stirnwand verschraubt wird.

Ein zweiter Aspekt der Erfindung betrifft ein Kraftfahrzeug, insbesondere einen Pkw. Dieses besitzt eine Stirnwand zur Abtrennung eines Fahrgastraums von einem Motorraum und ein an zwei Federbeindomen befestigtes Servicepanel nach einer der oben beschriebenen Ausführungsformen.

Eine optimale Querversteifung durch die Domstrebe des Servicepanels ergibt sich gemäß einer Ausführungsform des Kraftfahrzeugs dann, wenn sich die Domstrebe im Kraftfluss befindet, was in guter Näherung dann gegeben ist, wenn sich die Domstrebe zwischen den Federbeindomen befindet.

Weitere Merkmale und Vorteile der beanspruchten Erfindung werden aus der folgenden detaillierten Beschreibung mit Bezug auf die beigefügten Zeichnungen erkennbar, die nachfolgend als nicht beschränkende Beispiele angegeben sind. Hierbei soll die Benutzung von Bezugszeichen in den Figuren nicht dahingehend verstanden werden, dass die Bezugszeichen den Schutzumfang der beanspruchten Erfindung einschränken sollen. Es zeigen:
- Fig. 1: eine perspektivische Seitenansicht des Stirnwandbereichs eines Pkws,
- Fig. 2: einen Schnitt A-A durch die Figur 1.
- Fig. 3: eine perspektivische Detailansicht der Anbindung an den Dom
- Fig. 4: eine perspektivische Detailansicht weiterer Anbindungsmöglichkeiten

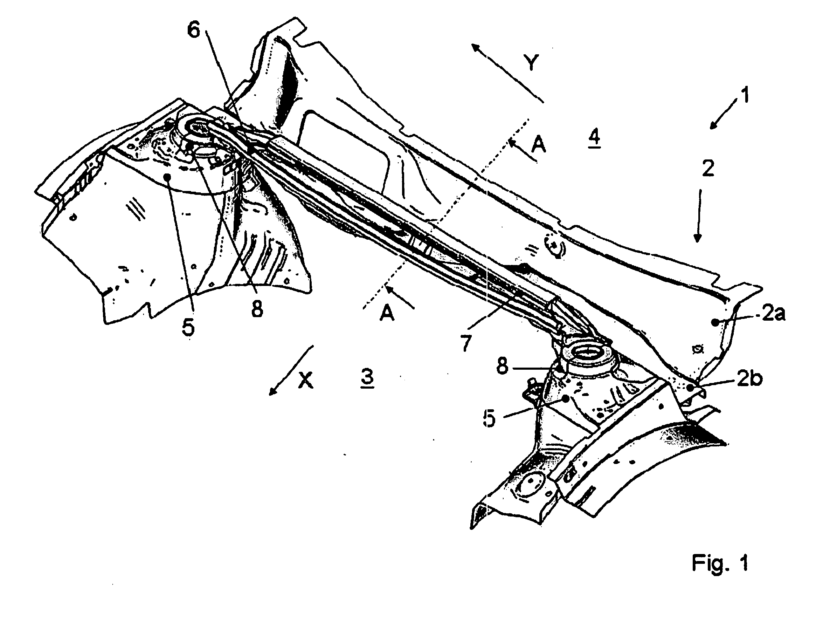

Bei den Figuren, die allgemein mit gleichen Bezugszeichen gleiche Gegenstände bezeichnen, zeigt Figur 1 ausschnittsweise ein Kraftfahrzeug 1 mit einer Stirnwand 2, wobei die Stirnwand 2 eine Stirnwand oben 2a und eine Stirnwand oben vorne 2b umfasst. Der Pfeil mit der Bezeichnung "X" gibt die Fahrzeuglängsrichtung an. Die Stirnwand 2 trennt den Motorraum 3 vom Fahrgastraum 4 ab. Die Stirnwand oben vorne 2b ist freigeschnitten und fällt insofern als Strukturteil für die Versteifung des Kraftfahrzeugs 1 in y-Richtung bzw. Fahrzeugquerrichtung aus. Die letztgenannte Richtung wird mit dem Pfeil mit der Bezeichnung "Y" angegeben.

Zwischen den beiden Federbeindomen 5 befindet sich ein Servicepanel 6. Im Servicepanel 6 ist eine Domstrebe 7 integriert. Das Servicepanel 6 mit integrierter Domstrebe 7 wird mit Halterungen 8 an den Federbeindomen 5 befestigt.

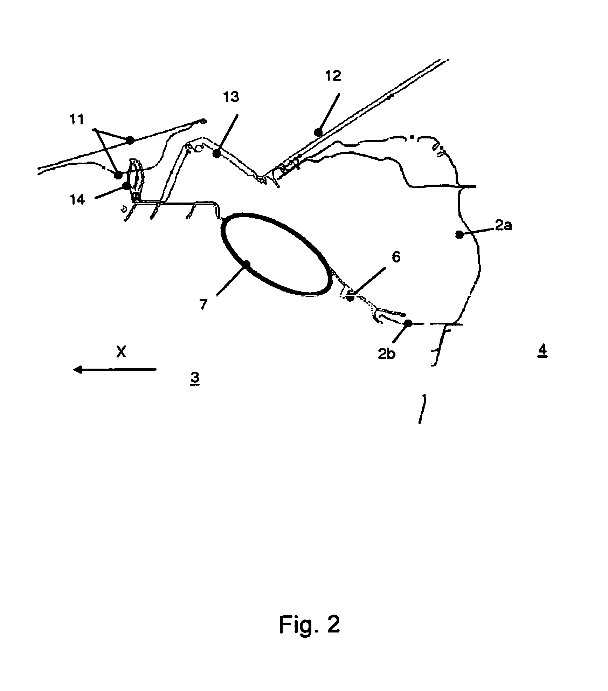

Figur 2 zeigt einen Schnitt A-A durch die Figur 1 mit Blick in Pfeilrichtung, d.h. in y-Richtung. Man erkennt die Stirnwand oben 2a mit der Stirnwand oben vorne 2b. Das Servicepanel 6 ist ein Spritzgussteil und besitzt integriert in seinem Inneren eine Domstrebe 7. Nach oben endet das Servicepanel 6 mit einer Haubendichtung 14, mit der die Öffnung zwischen Servicepanel 6 und Motorhaube 11 geschlossen wird. Nach oben hin wird der Bereich zwischen Motorhaube 11 und Windschutzscheibe 12 durch den Wasserabweiser 13 vor Schmutz und Wasser geschützt.

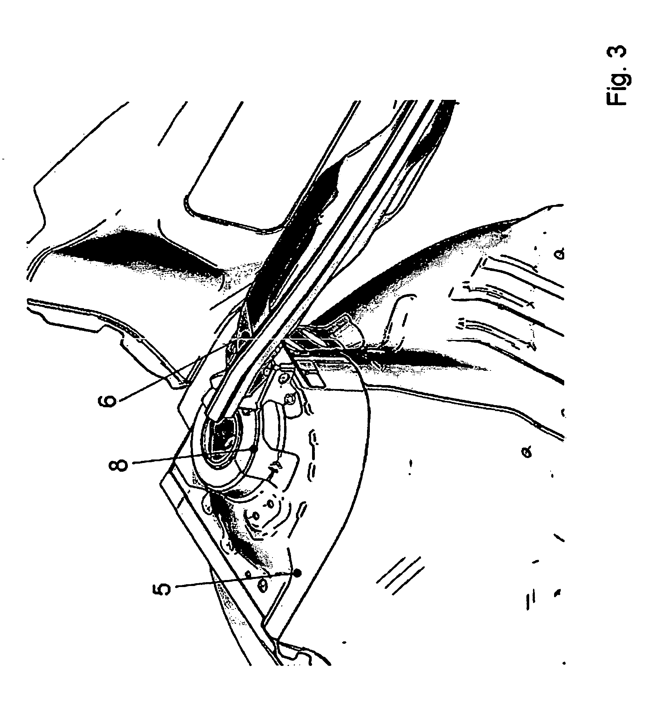

Figur 3 zeigt eine perspektivische Detailansicht der Anbindung an den Dom. Man erkennt das Servicepanel 6 mit integrierter Domstrebe 7 und eine Halterung 8 aus Blech, welche mit dem Federbeindom 5 verschweißt ist.

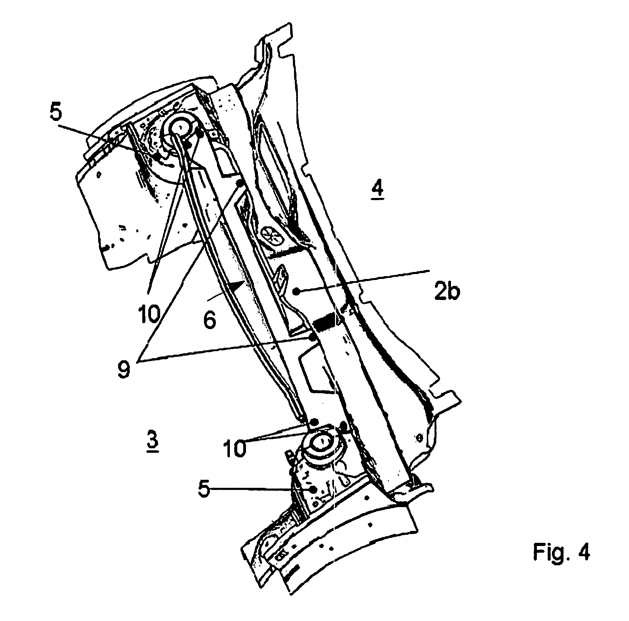

Figur 4 zeigt eine perspektivische Detailansicht einer Schraubverbindung 10, mit der das Servicepanel 6 am Federbeindom 5 befestigt ist, sowie eine weitere Schraubverbindung 9 zur Anbindung des Servicepanels an der Stirnwand oben vorn 2b. Dabei ist die Zahl der Schraubpunkte variabel.

Obwohl vorstehend konkrete Ausführungsformen beschrieben wurden, wird der Fachmann erkennen, dass die Beschreibung dieser Ausführungsformen nicht zum Zweck hat, die Erfindung in der angegebenen Form zu beschränken. Die Erfindung soll vielmehr alle Modifikationen, Äquivalente und Alternativen umfassen, die in den Schutzumfang der beanspruchten Erfindung fallen.

### Bezugszeichenliste

- 01: Kraftfahrzeug
- 02: Stirnwand
- 02a: Stirnwand oben
- 02b: Stirnwand oben vorne
- 03: Motorraum
- 04: Fahrgastraum
- 05: Federbeindom
- 06: Servicepanel
- 07: Domstrebe
- 08: Halterung
- 09: Schraubverbindung
- 10: Schraubverbindung
- 11: Motorhaube
- 12: Windschutzscheibe
- 13: Wasserabweiser
- 14: Haubendichtung

## Patentansprüche

1. Servicepanel (6) für ein Kraftfahrzeug, insbesondere für einen Pkw, ausgebildet zum Schließen einer Öffnung zwischen einer Stirnwand (2) und einer Motorhaube (11) unter Befestigung an den Federbeindomen (5) des Kraftfahrzeugs, **gekennzeichnet durch** eine in das Panel (6) integrierte Domstrebe (7) zur Bildung eines Hybridbauteils, so daß bei der Herstellung des Kraftfahrzeuges nur ein Teil anstelle von zwei Teilen montiert werden muß.

2. Servicepanel nach Anspruch 1, bestehend aus Kunststoff mit einer kunststoffumspritzten Domstrebe aus Metall.

3. Servicepanel nach einem der vorherigen Ansprüche, dessen Domstrebe endseitig mit Halterungen (8) zu ihrer Befestigung an Federbeindomen (5) ausgestattet ist.

4. Servicepanel nach einem der vorherigen Ansprüche, dessen Domstrebe mit Befestigungsstellen (9) zum Verbinden der Domstrebe mit einer Stirnwand ausgestattet ist.

5. Kraftfahrzeug, mit einer Stirnwand (2) zur Abtrennung eines Fahrgastraums (4) von einem Motorraum (3) und mit einem an zwei Federbeindomen (5) befestigten Servicepanel (6) nach einem der vorherigen Ansprüche.

6. Kraftfahrzeug nach einem der vorherigen Ansprüche, bei dem die Domstrebe des Servicepanels zwischen den beiden Federbeindomen angeordnet ist.

7. Kraftfahrzeug nach einem der vorherigen Ansprüche, bei dem die Domstrebe des Servicepanels mit der Stirnwand verschraubt ist.

## Claims

1. A service panel (6) for a motor vehicle, especially a passenger car, arranged for closing an opening between a front wall (2) and a hood (11) by fastening to the suspension strut caps (5) of the motor vehicle, **characterized by** a strut brace (7) integrated in the panel (6) for forming a hybrid component, so that only one part instead of two parts needs to be mounted during the production of the motor vehicle.

2. A service panel according to claim 1, consisting of plastic with a plastic-coated strut brace made of metal.

3. A service panel according to one of the preceding claims, the strut brace of which is provided at the end side with holders (8) for their fastening to suspension strut caps (5).

4. A service panel according to one of the preceding claims, the strut brace of which is provided with fastening points (9) for connecting the strut brace with a front wall.

5. A motor vehicle, comprising a front wall (2) for separating a passenger compartment (4) from an engine compartment (3) and a service panel (6) according to one of the preceding claims which is fastened to two suspension strut caps (5).

6. A motor vehicle according to one of the preceding claims, wherein the strut brace of the service panel is arranged between the two suspension strut braces.

7. A motor vehicle according to one of the preceding claims, wherein the strut brace of the service panel is screwed together with the front wall.

## Revendications

1. Trappe de visite (6) pour un véhicule à moteur, en particulier pour une voiture, conçue pour fermer une ouverture entre une paroi frontale (2) et un capot moteur (11) par une fixation aux dômes de jambe de suspension (5) du véhicule à moteur, **caractérisée en ce qu'**elle comporte une entretoise de dôme (7) intégrée dans la trappe (6) pour former un composant hybride, de sorte qu'une seule pièce doit être montée au lieu de deux pièces lors de la fabrication du véhicule à moteur.

2. Trappe de visite selon la revendication 1, composée de matière plastique avec une entretoise de dôme métallique enrobée de plastique par injection.

3. Trappe de visite selon l'une des revendications précédentes, dont l'entretoise de dôme est munie à l'extrémité de montures (8) pour sa fixation sur des dômes de jambe de suspension (5).

4. Trappe de visite selon l'une des revendications précédentes, dont l'entretoise de dôme est munie de points de fixation (9) pour l'assemblage de l'entretoise de dôme avec une paroi frontale.

5. Véhicule à moteur avec une paroi frontale (2) séparant un habitacle (4) d'un compartiment moteur (3) et avec une trappe de visite (6) selon l'une des revendications précédentes fixée sur deux dômes de jambe de suspension (5).

6. Véhicule à moteur selon l'une des revendications précédentes, dans lequel l'entretoise de dôme de la trappe de visite est disposée entre les deux dômes de jambe de suspension.

7. Véhicule à moteur selon l'une des revendications précédentes, dans lequel l'entretoise de dôme de la trappe de visite est vissée sur la paroi frontale.
